# FASCICULE DE BREVET EUROPEEN

(11) **EP 0 780 588 B1**
(45) Date de publication et mention de la délivrance du brevet: **14.03.2001**
(21) Numéro de dépôt: 96120476.5
(22) Date de dépôt: 19.12.1996
(51) Int. Cl.: F16D 13/70

(54) **Module d'embrayage comportant une cible définissant des créneaux**
Kupplungseinheit mit einem verzahnten Targetring
Clutch unit comprising a slitted target ring

(30) Priorité: 20.12.1995 FR 9515137
(43) Date de publication de la demande: 25.06.1997
(73) Titulaire: VALEO, 75017 Paris (FR)
(72) Inventeur: Giroire, Jean-Pierre, 78100 Saint Germain en Laye (FR); Viola, Paolo, 75007 Paris (FR)
(74) Mandataire: Gamonal, Didier

(56) Documents cités:
- EP-A- 0 208 400
- WO-A-95/28576
- DE-A- 3 225 865
- FR-A- 2 526 106
- FR-A- 2 546 594
- GB-A- 2 134 997
- GB-A- 2 144 810
- GB-A- 2 243 884
- GB-A- 2 248 476

## Description

On sait que, pour l'allumage ou l'alimentation, notamment par injection, des moteurs, il est nécessaire d'effectuer ces opérations à des positions précises angulaire du vilebrequin ; à cet effet, un capteur dit de position est solidaire du carter moteur et vise une cible, en général une cible permettant de définir des créneaux transversaux, c'est-à-dire dans le sens radial, tournant, au droit du capteur, dans un plan transversal, perpendiculaire à l'axe du vilebrequin, et solidaire en rotation de celui-ci ; une telle cible est souvent utilisée également pour obtenir une information image de la vitesse du vilebrequin, une telle variable étant le plus souvent prise en compte pour les opérations ci-dessus.

La fiabilité des informations fournies par un tel capteur associé à une telle cible dépend de la profondeur des créneaux définis par la cible.

On a dans le passé utilisé comme cible la couronne de démarreur ; on a proposé également de percer des trous dans le couvercle de l'embrayage ou de le munir de pattes axiales réparties circonférentiellement ; mais ces solutions ne conviennent pas, la profondeur des créneaux étant insuffisante ; pour augmenter celle-ci, on a proposé également de ménager, au droit des perçages du couvercle, ou des échancrures définies entre ses pattes axiales, des creusures dans la pièce en regard, plateau de réaction ou plateau de pression. Malheureusement, ces solutions sont onéreuses, car, la cible devant être adaptée à chaque application, ne serait-ce par exemple qu'aux cas différents des moteurs à essence, à allumage commandé, et des moteurs Diesel, les pièces concernées, à savoir couvercle, plateau de pression, plateau de réaction, deviennent spécifiques.

Dans le document GB-A-2 134 997, conforme au préambule de la revendication 1, la cible appartient à un module d'embrayage comportant un couvercle et un plateau de réaction. Cette cible est prolongée radialement par un voile intercalé entre le couvercle et le plateau de réaction en sorte que la fixation de la cible au module est réalisée par des organes de fixation du type vis ou rivets, comme représenté dans les figures 2 et 3 de ce document, les dits organes fixant également le couvercle au plateau de réaction.

Il peut être souhaitable de s'affranchir de ce type de fixation imposant une configuration donnée aux composants du module.

La présente invention a pour but de pallier ces inconvénients.

Conformément à l'invention ce problème est résolu par la partie caractérisante de la revendication 1.

Grâce à l'invention, le couvercle du module peut être standard ; un même couvercle peut donc être utilisé pour un véhicule à moteur à essence et pour un véhicule à moteur Diesel, seul le nombre de créneaux variant.

La hauteur des entretoises est choisie suffisante pour que la fiabilité des informations du capteur associé à ladite cible soit assurée.

Grâce à l'invention la cible peut être fixée sur le couvercle ou flasque du module. Différents moyens de fixation du couvercle peuvent donc être envisagés.

Avantageusement, les entretoises sont placées aux extrémités axiales de la partie médiane, encadrant ainsi axialement lesdites ouvertures.

De préférence, les entretoises sont des joues pleines transversales.

Avantageusement, dans le cas où le module d'embrayage porte une couronne de démarreur, la cible est placée axialement contre ladite couronne ; la solidarisation par soudage de la cible n'est prévue que du côté libre de la cible, c'est-à-dire opposé à celui par lequel elle est au contact de la couronne de démarreur. En effet, il n'y a pas besoin de soudure au niveau de la couronne de démarreur du fait que la cible est en appui contre la couronne de démarreur par son entretoise en sorte que la force centrifuge est sans effet, la cible ne pouvant pas se déployer.

De préférence, chacune des pattes de fixation du couvercle traverse axialement un passage d'orientation axiale formé à la périphérie externe du flasque de support pour s'étendre axialement au-delà de la face d'extrémité axiale du flasque de support, et le tronçon d'extrémité libre de la patte de fixation qui fait saillie est retenu axialement par rapport au flasque de support et au plateau de réaction, la couronne de démarreur étant solidarisée par soudage au flasque de support, ou par frettage au plateau de réaction, et la cible auxdites pattes ; le tronçon d'extrémité libre des pattes est soudé au flasque de support ; ledit tronçon d'extrémité libre est rabattu radialement, de préférence vers l'extérieur en regard d'une face transversale en vis-à-vis de la couronne de démarreur ; le tronçon d'extrémité libre est soudé à la couronne de démarreur ; le tronçon d'extrémité libre est serti.

De préférence, chaque passage est une rainure axiale formée dans la surface périphérique externe du flasque de support et qui est ouverte radialement vers l'extérieur.

Selon une variante, chacune des pattes de fixation du couvercle traverse axialement un passage d'orientation axiale formé à la périphérie externe du plateau de réaction, pour s'étendre axialement au-delà de la face radiale du plateau de réaction opposée à la surface radiale de friction, et le tronçon d'extrémité libre de la patte de fixation qui fait saillie est retenu axialement par rapport au plateau de réaction.

Dans tous les cas, de préférence chaque passage est agencé radialement vers l'intérieur par rapport à la couronne de démarreur.

Avantageusement, les pattes de fixation sont issues d'une jupe annulaire d'orientation axiale que présente le couvercle à sa périphérie externe.

Selon une autre variante, le flasque de support présente des pattes, ou une jupe annulaire, d'orientation axiale sur lesquelles est montée la cible et auxquelles elle est solidarisée par soudage.

Pour mieux faire comprendre l'objet de l'invention, on va en décrire maintenant, à titre d'exemple, purement illustratif et non limitatif, un mode de réalisation représenté sur les dessins annexés.

Sur ces dessins :
- la figure 1 est une vue en section axiale d'un module d'embrayage selon l'invention ;
- la figure 2 est une vue à plus grande échelle de la partie inférieure de la figure 1 ;
- la figure 3 est une vue partielle en coupe selon III-III de la figure 2 ;
- la figure 4 est une vue partielle selon la flèche IV de la figure 2 ;
- la figure 5 est analogue à la figure 2 et concerne une variante ;
- la figure 6 est une vue partielle selon la flèche VI de la figure 5 ;
- la figure 7 est une vue partielle en coupe selon VII-VII de la figure 6 ;
- la figure 8 est analogue à la figure 2 et concerne une variante ;
- la figure 9 est une vue partielle en coupe selon IX-IX de la figure 8 ;
- la figure 10 est une vue partielle selon la flèche X de la figure 8 ;
- la figure 11 est analogue à la figure 2 et concerne une autre variante ;
- la figure 12 est une vue partielle en coupe selon XII-XII de la figure 11 ;
- la figure 13 est une vue partielle selon la flèche XIII de la figure 12 ;
- la figure 14 est une vue partielle des figures 2, 5, 8 et 11 montrant une variante de solidarisation du plateau de réaction et du flasque de support ;
- la figure 15 est analogue à la figure 1 et concerne encore une autre variante.

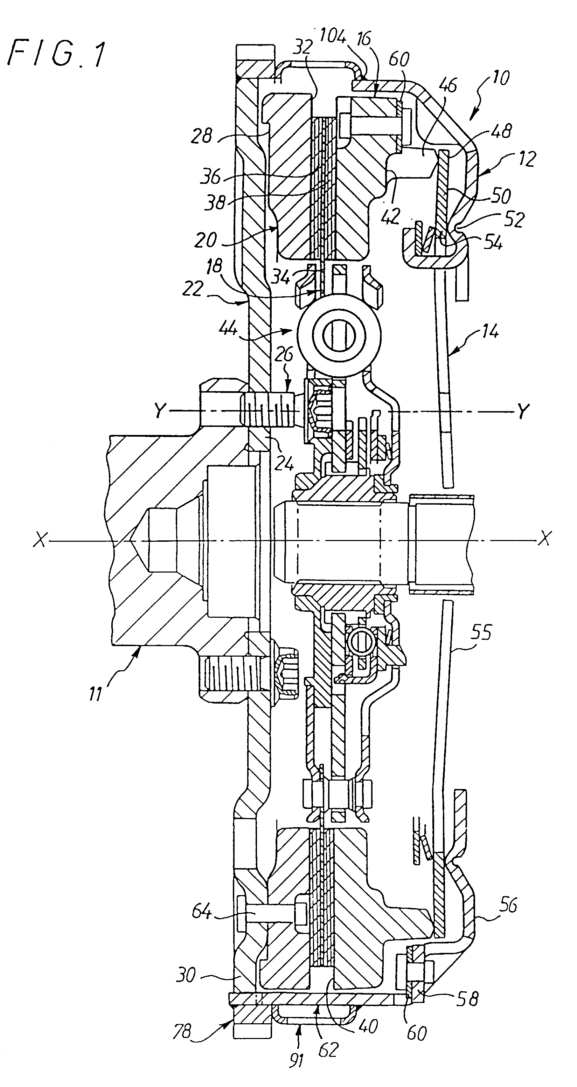

On a représenté sur les figures 1 à 4 un module d'embrayage pour véhicule automobile.

Le module 10 comporte de manière unitaire un ensemble de pièces adjacentes de forme générale annulaire et coaxiales selon l'axe X-X du module d'embrayage. Parmi ces pièces annulaires, on distingue, successivement axialement, un couvercle 12, un diaphragme 14, un plateau de pression 16, un disque de friction 18 et un plateau de réaction 20.

Le plateau de réaction 20 est destiné à être calé en rotation sur le vilebrequin 11 d'un moteur à combustion interne de véhicule automobile en étant fixé à celui-ci par l'intermédiaire d'un flasque de support 22 en forme de disque annulaire dont la partie centrale 24 est fixée au vilebrequin par des vis 26.

Le plateau de réaction 20 est une pièce de forme annulaire, en fonte, délimitée axialement par une première face radiale 28 d'orientation générale transversale contre laquelle prend appui la couronne annulaire périphérique 30 du flasque de support 22, ici métallique, et par une face radiale opposée 32 qui est une face usinée constituant l'une des faces de friction pour le disque de friction 18.

Le disque de friction, selon un exemple de réalisation connu, est constitué ici pour l'essentiel par un disque de support de forme générale annulaire 34 qui porte sur chacune de ses faces opposées une garniture de friction annulaire continue. Une première garniture 36 est prévue pour coopérer avec la face radiale de friction 32 du plateau de réaction 20, tandis que la garniture de friction opposée 38 est prévue pour coopérer avec une face radiale de friction 40 qui constitue l'une des deux faces transversales délimitant le plateau de pression 16 qui est une pièce de forme générale annulaire en fonte délimitée axialement, à l'opposé de la face de friction 40, par une face d'orientation générale transversale 42.

Selon une conception connue, le disque 34 de support des garnitures de friction 36 et 38 est prévu pour être relié par l'intermédiaire d'un moyeu central (non référencé) cannelé intérieurement à un arbre mené (non référencé) tel que par exemple l'arbre d'entrée de la boîte de vitesses équipant le véhicule automobile, avec interposition d'un amortisseur 44 qui ne sera pas décrit ici plus en détail. Il est à noter toutefois que l'amortisseur 44 est du type de celui qui est décrit dans le document FR-A-2 710 377 ou dans la demande de brevet français déposée le 24 Août 1994 sous le numéro 94 10 310 : les rondelles et le voile de l'amortisseur principal et du préamortisseur dudit amortisseur 44, radialement en dessous des organes élastiques à action circonférentielle accouplant élastiquement lesdites rondelles au voile, sont dotés de trous et/ou échancrures en coïncidence selon un axe commun Y-Y permettant le passage d'un outil pour le montage du module d'embrayage sur le vilebrequin 11 par serrage des vis 26 solidarisant le flasque de support 22 audit vilebrequin 11.

La face transversale 42 du plateau de pression 16 comporte une série de bossages 46 répartis angulairement de manière régulière et dont chacun s'étend axialement en saillie en direction du couvercle 12 pour constituer des appuis pour la zone périphérique externe 48 de la rondelle annulaire élastique 50 constituant la partie périphérique externe du diaphragme 14. En effet, selon une conception connue, le diaphragme 14 comporte une partie annulaire périphérique externe 50, en forme de rondelle Belleville, qui est interposée élastiquement entre les bossages 46 du plateau de pression 16 et une nervure annulaire d'appui 52 qui s'étend en relief vers l'intérieur du couvercle 12 et sur laquelle prend appui la zone périphérique intérieure 54 de la rondelle Belleville, cette dernière étant prolongée radialement vers l'intérieur par une partie centrale fragmentée en doigts radiaux 55 par des fentes séparant deux à deux lesdits doigts.

La rondelle Belleville 14 a pour fonction de solliciter axialement le plateau de pression dans le sens correspondant au serrage axial du disque de friction 18 entre les faces de friction 32 et 40.

Le couvercle 12, ici métallique, de forme creuse est constitué pour l'essentiel par un voile annulaire 56 d'orientation générale transversale qui est troué centralement et qui comporte au voisinage de son bord périphérique extérieur 58 des moyens 60 pour un attelage avec le plateau de pression 16, ces moyens d'attelage 60 permettant, selon une conception connue, un déplacement axial relatif du plateau de pression 16 par rapport au couvercle 12. Ils interviennent directement entre le plateau de pression 16 et le couvercle 12. Les moyens d'attelage 60 consistent ici, de manière connue, en des languettes élastiques d'orientation tangentielle dont une extrémité est fixée par rivetage au bord périphérique extérieur 58 du voile 56, constituant le fond du couvercle 12, et dont l'autre extrémité est fixée au plateau de pression 16.

Ici la fixation est réalisée à l'aide de rivets, en variante elle peut être réalisée à l'aide de vis, de boulons ou tous autres organes de fixation. Le bord 58 est globalement d'orientation transversale. Ce bord est percé pour accès aux têtes des rivets de fixation des languettes 60 au plateau de pression 16. La face de friction 40 du plateau 16 présente localement des logements pour accès auxdits rivets. Ainsi, on fixe d'abord les languettes 60 au rebord 58, le diaphragme 14 étant déjà monté sur le couvercle 12, puis on fixe l'autre extrémité des languettes. On obtient ainsi un premier sous ensemble unitaire comprenant le plateau de pression 16, le diaphragme 14 et le couvercle 12.

On notera qu'ici l'embrayage est du type poussé, le diaphragme 14 étant monté de manière basculante sur le couvercle 12. Normalement, le diaphragme 14 prend appui sur la nervure 52 du couvercle 12, formant un appui primaire pour le diaphragme 14, et sollicite, grâce aux bossages 46, le plateau de pression 16 en direction du plateau de réaction 20 pour serrage des garnitures de friction 36, 38 entre les plateaux 16, 20.

Ainsi le couple est transmis du vilebrequin, au moyen du disque de friction 18, à l'arbre d'entrée de la boîte de vitesses.

L'embrayage est ainsi engagé.

Pour désengager l'embrayage, on agit en poussant à l'aide d'une butée de débrayage non représentée sur l'extrémité interne des doigts 55 du diaphragme 14. Celui-ci bascule et prend appui alors sur son appui secondaire, décrit ci-après. Les languettes rappellent alors le plateau de pression 16 en direction du fond du couvercle en sorte que les garnitures de friction 36, 38 sont libérées. L'embrayage est alors désengagé.

Ici le diaphragme 14 est monté basculant sur le couvercle 12, de manière connue, à l'aide de pattes d'assemblage issues d'un seul tenant de celui-ci par découpe et pliage, le couvercle étant en tôle emboutie. Les pattes sont d'orientation axiale et traversent le diaphragme à la faveur d'orifices que celui-ci présente au niveau de la racine de ses doigts 55, c'est-à-dire à la périphérie interne 54 de sa rondelle Belleville 50. Ces orifices forment l'extrémité borgne élargie des fentes séparant les doigts 55. Au-delà du diaphragme, les pattes, à leur extrémité libre, sont repliées radialement en direction opposée à l'axe de l'ensemble X-X pour formation d'un coude de calage pour une rondelle de support d'une couronne-jonc prenant appui sur l'autre face du diaphragme 14. Cette couronne-jonc, intercalée entre le diaphragme 14 et la rondelle de support, est de forme tronconique et présente à sa périphérie externe une forme arrondie pour contact avec le diaphragme 14 et formation d'un appui secondaire en vis-à-vis de l'appui primaire 52.

Bien entendu la présence de la rondelle de support n'est pas obligatoire. En variante, les pattes d'assemblage peuvent être remplacées par des colonnettes dont la tête est profilée pour former un appui secondaire, lesdites colonnettes portant un jonc interposé entre le fond du couvercle et le diaphragme pour former l'appui primaire.

Bien entendu l'embrayage peut être du type tiré, la rondelle Belleville 50 s'appuyant alors à sa périphérie externe sur une nervure annulaire du couvercle 12 et à sa périphérie interne sur un bossage du plateau de pression 16. Dans ce cas, on agit, à l'aide de la butée de débrayage, en tirant sur l'extrémité interne des doigts 55 du diaphragme pour désengager l'embrayage.

De même le disque de friction peut ne comporter qu'une seule garniture de friction à l'intérieur de laquelle est noyé le disque 34. Cette garniture présente deux faces pour coopérer avec les faces de friction 32 et 40.

Le couvercle 12 comporte également des moyens de fixation 62 qui s'étendent axialement depuis son bord périphérique extérieur 58 en direction du flasque de support 22 et qui permettent la fixation du couvercle 12 sur le flasque de support 22 de manière à réaliser un module d'embrayage constituant un sous-ensemble pouvant être monté et fixé sur le vilebrequin 11 après que le plateau de réaction 20 ait été solidarisé au flasque de support 22 par une série de rivets de fixation 64.

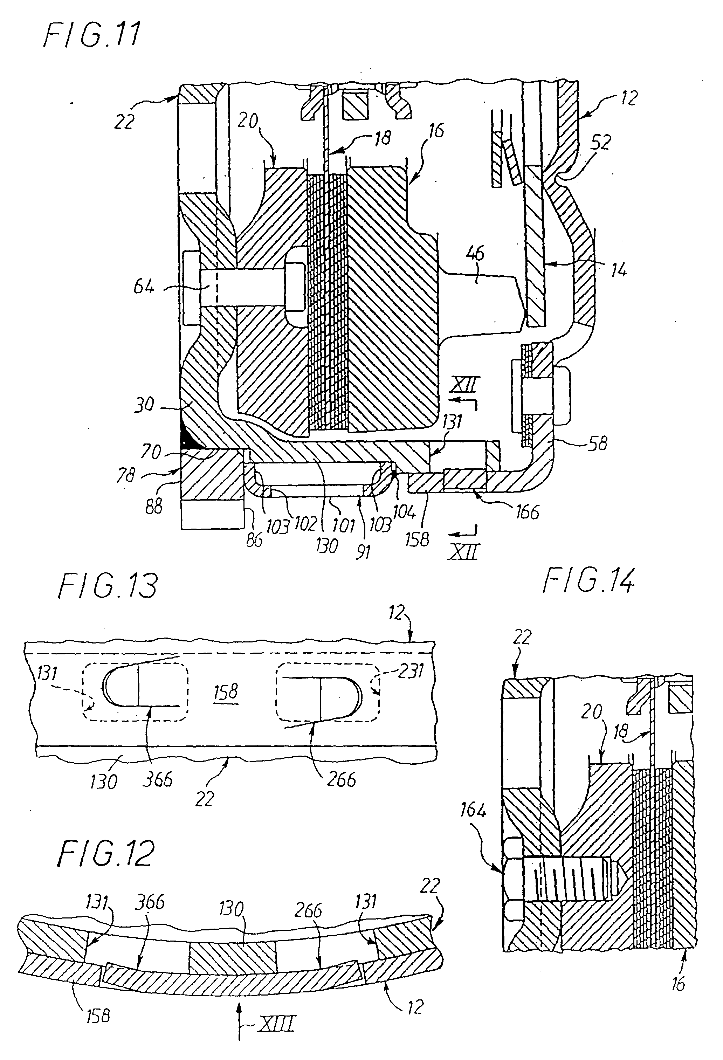

Les rivets 64 sont implantés radialement en dessous des moyens de fixation 62. En variante, comme montré sur la figure 14, les rivets 64 sont remplacés par des vis 164 ; la tige filetée des vis 164 traverse la couronne 30 du flasque 22 pour se visser dans un trou taraudé réalisé dans le plateau 20. En variante les vis 164 traversent le plateau 20 pour se visser dans un écrou de préférence solidaire de la couronne 30 par exemple par soudage.

Quoi qu'il en soit, les garnitures de friction 36, 38 ont une grande hauteur et peuvent venir au plus près des moyens de fixation 62. Pour un encombrement radial donné du module 10, on obtient, grâce aux moyens de fixation 62, une grande hauteur pour les garnitures de friction 36, 38.

Les moyens de fixation 62 sont constitués par une série de pattes de fixation 66, d'orientation générale axiale qui s'étendent axialement depuis le bord périphérique 58 de la partie en forme de disque annulaire 56 du couvercle 12 en direction du flasque de support 22.

Les pattes 66, formant des tenons, sont par exemple réparties angulairement de manière uniforme à la périphérie du couvercle 12.

Chaque patte de fixation 66 est reçue, ici à jeu de montage, dans un passage 68 d'orientation axiale formé au voisinage de la surface externe de la couronne annulaire périphérique 30 du flasque de support 22.

Dans le mode de réalisation illustré aux figures 1 à 4, chaque passage 68, formant mortaise, est réalisé sous la forme d'une rainure axiale débouchante à ses deux extrémités.

Chaque rainure 68 est délimitée radialement vers l'intérieur par un fond 74 et elle débouche radialement vers l'extérieur dans la surface périphérique externe 70 du flasque de support 22.

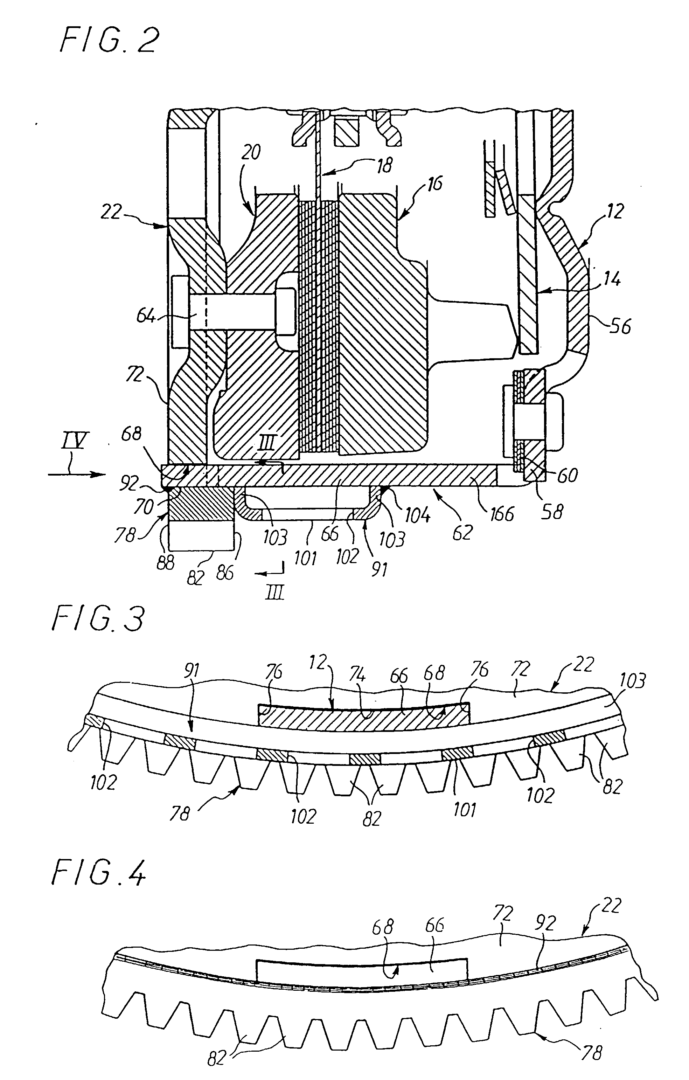

La largeur de chaque rainure, délimitée par ses deux flancs parallèles 76, est légèrement supérieure à la largeur circonférentielle de la patte de fixation 66 de manière que cette dernière puisse être introduite axialement dans la rainure 68, de la droite vers la gauche selon la figure 2. Il est ainsi formé un assemblage du type tenons-mortaises.

Dans le mode de réalisation illustré sur les figures, le module d'embrayage 10 porte à sa périphérie une couronne de démarreur 78, ici métallique, de forme générale annulaire comportant un corps cylindrique annulaire et des dents 82.

La couronne de démarreur 78 est montée sur la surface périphérique externe 70 du flasque de support 22.

Dans cette position de montage dans laquelle une première face transversale 86 du corps de la couronne de démarreur 78 est en appui contre une cible 91 décrite ci-après, la face transversale opposée 88 de la couronne de démarreur 78 s'étend sensiblement dans le même plan vertical que la face d'extrémité axiale 72 du flasque de support 22.

La longueur de chaque patte de fixation 66 est telle que, en position introduite dans sa rainure 68, elle fasse saillie axialement, par son tronçon d'extrémité libre, au-delà de la face transversale d'extrémité axiale 72 du flasque de support 22 et au-delà de la face latérale 88 de la couronne de démarreur 78.

L'épaisseur radiale de la patte de fixation 66 est légèrement inférieure à la distance radiale séparant le fond 74 du passage 68 de la surface périphérique externe 70 de manière à pouvoir être introduite en dessous de la couronne de démarreur 78, c'est-à-dire vers l'intérieur par rapport à cette dernière.

Selon le mode de réalisation représenté aux figures 1 à 4, la fixation de chaque patte 66 par rapport au flasque de support 22 est assurée au moyen d'une soudure 92 continue réalisée entre son tronçon d'extrémité libre et la couronne de démarreur 78 métallique, laquelle soudure relie également la couronne de démarreur 78 au flasque de support 22.

Plus précisément, le point de soudure entre le tronçon d'extrémité libre et la portion en vis-à-vis de la face latérale 88 de la couronne de démarreur 78 permet d'immobiliser axialement la patte de fixation 66 par rapport au flasque de support 22 et d'immobiliser en rotation la couronne de démarreur 78 par rapport au flasque de support 22.

Selon l'invention, le module d'embrayage porte une cible constituée par une pièce rapportée ; plus précisément, ici la cible 91 est une pièce en tôle rapportée, solidarisée par soudage à la périphérie de l'un des éléments flasque de support (22) - couvercle (12) ; elle comprend une partie médiane cylindrique 101 munie d'ouvertures 102 réparties circonférentiellement et reliée par des entretoises 103 au couvercle 12 par l'intermédiaire des pattes 66 de celui-ci qu'elle entoure ; les entretoises 103 sont ici en forme de joues pleines transversales ; en variante, les entretoises sont des pattes transversales réparties circonférentiellement ; comme on le voit sur les figures 1 et 2, la cible 91 est placée axialement contre la couronne de démarreur 78 en sorte que, pour sa solidarisation au couvercle 12, une soudure 104 est prévue seulement entre les pattes 66 et la joue 103 opposée à celle qui est en contact avec la couronne de démarreur 78.

Selon une variante de réalisation, non représentée sur les figures, l'immobilisation axiale de chaque patte de fixation 66 par rapport au plateau de réaction 20 pourrait être assurée en rabattant radialement le tronçon d'extrémité libre vers l'intérieur ou vers l'extérieur en regard de la face latérale 88 de la couronne de démarreur 78.

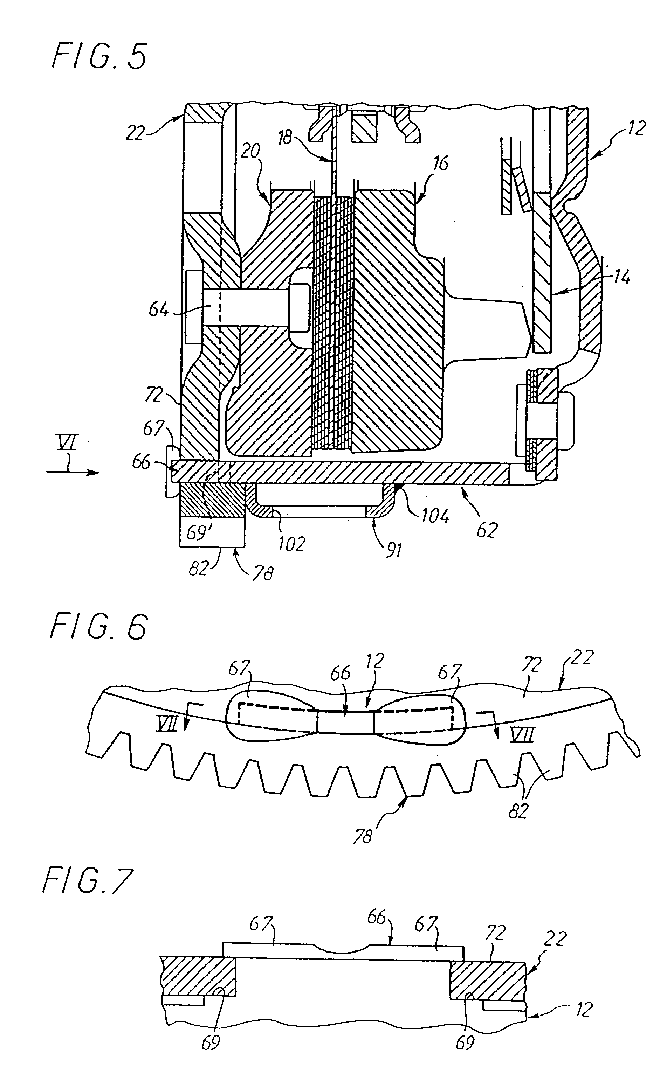

L'immobilisation peut également être réalisée en sertissant le tronçon d'extrémité libre à la manière d'une tête de rivet ou par tout autre moyen équivalent : c'est la variante représentée sur les figures 5 à 7 qui montrent des pattes 66 dont l'extrémité est sertie axialement pour réaliser en bout des pattes 66 de chaque côté de celles-ci des têtes de maintien 67 ; l'immobilisation axiale est réalisée grâce à un épaulement 69 réalisé de chaque côté des pattes 66 et sur lequel prend appui le flasque de support 22.

Dans ces deux dernières variantes, la couronne de démarreur est soudée au flasque de support 22.

La conception des moyens de fixation 62 est particulièrement avantageuse en ce qu'elle permet de manière simple et efficace d'assurer la fixation du couvercle 12 sur le flasque de support 22 en amenant celui-ci axialement en vue d'introduire les pattes 66 dans les passages axiaux 68 puis de régler la position axiale relative du couvercle 12 par rapport au flasque de support 22, donc par rapport au plateau de réaction 20, et enfin d'assurer la fixation finale par soudage de la couronne de démarreur 78.

Bien entendu, les pattes 66 peuvent être issues d'une jupe annulaire 166, d'orientation axiale (figure 2), s'étendant à la périphérie externe du rebord périphérique externe 58 du fond 56 du couvercle 12.

Plus précisément les pattes 66 affectent l'extrémité libre de la jupe 166 qui a ainsi une forme de peigne annulaire.

Le nombre des pattes 66 et des rainures 68 dépend des applications.

Bien entendu la longueur des pattes 66 est fonction de la longueur des rainures 68.

On appréciera que ce dernier mode de réalisation à pattes 66 issues de la jupe 166 est préférable car le couvercle est plus rigide. En outre, elle est nécessaire quand l'immobilisation axiale est réalisée par rabattement des pattes 66 ou par sertissage. Dans ce cas, il est formé un épaulement à la racine des pattes 66, c'est-à-dire à leur jonction avec la partie continue de la jupe 166. Le couvercle est ainsi immobilisé axialement entre ledit épaulement, en contact alors avec la face interne du flasque de support 22, et l'extrémité rabattue ou sertie des pattes 66 au contact de la face 72 ou de la face 88.

Dans la forme de réalisation des figures 1 à 4, ledit épaulement n'est pas forcément au contact de la face 72, car les pattes 66 sont fixées par soudage à la couronne métallique de démarreur 78, c'est-à-dire immobilisées axialement dans les deux sens. Grâce à cette disposition, on peut régler au départ l'inclinaison et/ou la position du diaphragme 14.

Bien entendu, on peut régler la position de l'appui primaire 52 de manière précise par rapport au flasque de support 22. Les pattes 66 peuvent être épaulées pour venir en prise avec la face interne du flasque de support 22.

On appréciera que le plateau de pression 16 est dépourvu de pattes saillantes pour la fixation des languettes 60. Ce plateau 16 est logé à l'intérieur du couvercle 12, tout comme le disque de friction 18.

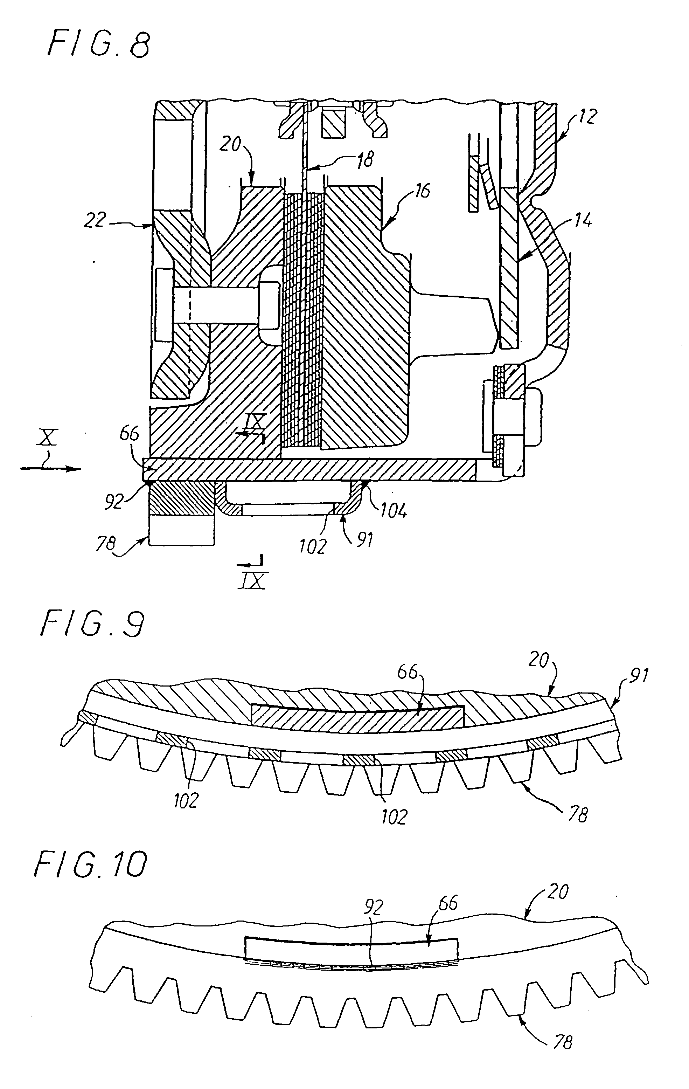

Selon la variante des figures 8 à 10, les extrémités des pattes 66 du couvercle 12 prennent place dans des échancrures axiales ménagées à la périphérie externe du plateau de réaction 20 et la couronne de démarreur 78 est frettée sur ladite périphérie du plateau de réaction 20 en entourant, par la même occasion, les pattes 66 dont l'extrémité est ensuite soudée en 92 sur la couronne de démarreur 78. La cible 91 est montée de la même manière que celle utilisée dans la variante précédente.

Selon les figures 11 à 13, le couvercle 12 et le flasque de support 22 sont assemblés par coopération de deux séries de pattes 366 et 266, s'étendant globalement transversalement, portées par une jupe 158 d'orientation axiale que comporte le couvercle 12, avec deux séries d'ouvertures 131, 231 ménagées dans une jupe 130 d'orientation axiale que comporte le flasque de support 22, la jupe 158 du couvercle 12 entourant la jupe 130 du flasque de support 22 sur au moins une partie de sa longueur ; la coopération des pattes 366 et 266 avec leurs ouvertures associées 131, 231 respectivement est obtenue en rabattant au moins l'extrémité de chaque patte dans son ouverture associée ; avantageusement, comme cela est visible sur la figure 10, le bord des pattes qui va coopérer en butée avec le bord de l'ouverture en regard fait un angle avec ledit bord de ladite ouverture en sorte que la butée axiale est réglable axialement ; les deux séries de pattes sont agencées en sorte que le couvercle 12 est immobilisé axialement dans les deux sens par rapport au flasque de support.

La couronne de démarreur 78 entoure le bord périphérique 70 du flasque de support 22 et est soudée à celui-ci.

La cible 91 est portée par la jupe 130 du flasque de support 22 qu'elle entoure et est fixée par soudage ; comme précédement, la cible 91 est adossée à la couronne de démarreur 78 et un seul cordon de soudure 104 relie la jupe 130 et la joue 103 de la cible 91 la plus éloignée de la couronne de démarreur 78.

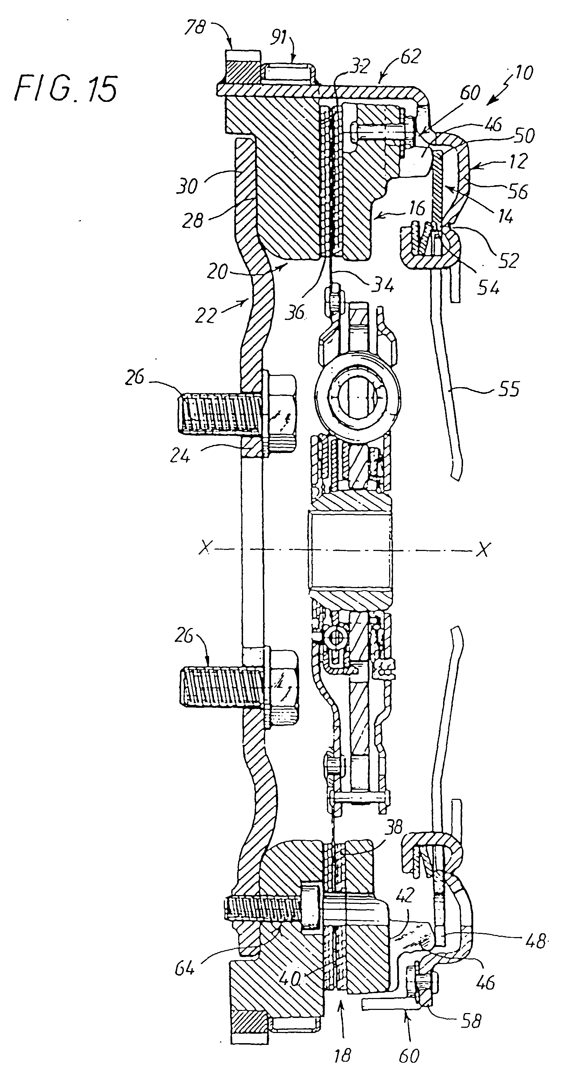

La figure 15 présente une variante de module d'embrayage du genre de celui qui est décrit dans la demande de brevet français déposée le 24 Octobre 1995 sous le numéro 95 12523, et dès lors ne sera pas détaillée ici ; selon cette variante, les pattes axiales du couvercle traversent des passages ménagés à la périphérie externe du plateau de réaction 20 ; la couronne de démarreur 78 est frettée sur le plateau de réaction ; l'extrémité desdites pattes axiales sont soudées à la face externe de la couronne de démarreur 78 ; la cible 91 est soudée auxdites pattes axiales après avoir été adossée à la couronne de démarreur 78.

Ici, le module d'embrayage comprend un premier sous-ensemble constitué par le plateau de réaction, le disque de friction, le plateau de pression, le diaphragme, et le couvercle, sous-ensemble qui est fixé ensuite par des vis 64 sur le flasque de support 22 préalablement fixé à l'extrémité du vilebrequin par des vis 26.

## Revendications

1. Module d'embrayage (10), notamment pour véhicule automobile, du type comportant un ensemble de pièces adjacentes de forme générale annulaire et coaxiales parmi lesquelles sont agencés successivement axialement un couvercle (12), un diaphragme (14), un plateau de pression (16) lié en rotation au couvercle (12) par des moyens d'attelage (60) permettant un déplacement axial du plateau de pression (16) par rapport au couvercle (12), un disque de friction (18) propre à être relié à un arbre mené, et un plateau de réaction (20) fixé au couvercle (12) par des moyens de fixation (62) agencés à la périphérie externe du module (10), et du type dans lequel le plateau de réaction (20) est solidaire d'un flasque de support (22) propre à être solidarisé en rotation à un arbre menant, au moyen d'une série d'organes de fixation (26) agencés radialement vers l'intérieur par rapport auxdits moyens de fixation (62), dans lequel le plateau de pression (16) est lié directement en rotation au couvercle (12) par lesdits moyens d'attelage (60), le couvercle (12) comporte à sa périphérie externe une série de pattes de fixation (66) qui s'étendent axialement depuis un bord périphérique (58) du couvercle (12), portant une cible définissant des créneaux, caractérisé par le fait que ladite cible est une pièce en tôle rapportée, solidarisée par soudage à la périphérie de l'un des éléments flasque de support (22) - couvercle (12) et par le fait que ladite cible (91) comprend une partie médiane cylindrique (101), munie d'ouvertures (102) réparties circonférentiellement, reliée par des entretoises (103) au module d'embrayage.

2. Module d'embrayage selon la revendication 1, caractérisé par le fait que les entretoises (103) sont placées aux extrémités axiales de la partie médiane (101).

3. Module d'embrayage selon les revendications 2 ou 3, caractérisé en ce que les entretoises (103) sont d'orientation transversale et en ce que la cible (91) entoure la pièce du module d'embrayage, qui porte la dite cible.

4. Module d'embrayage selon les revendications 2 ou 3, caractérisé par le fait que les entretoises (103) sont des joues pleines transversales.

5. Module d'embrayage selon l'une des revendications 1 à 4, dans lequel le module d'embrayage porte une couronne de démarreur (78), caractérisé par le fait que la cible (91) est placée axialement contre ladite couronne de démarreur (78).

6. Module d'embrayage selon la revendication 5, caractérisé par le fait que la solidarisation de la cible (91) par soudage n'est prévue que du côté libre de la cible (91) opposé à celui par lequel elle est au contact de la couronne de démarreur (78).

7. Module d'embrayage selon l'une des revendications 1 à 6, caractérisé par le fait que chacune des pattes de fixation (66) du couvercle (12) traverse axialement un passage (68) d'orientation axiale formé à la périphérie externe du flasque de support (22) pour s'étendre axialement au-delà de la face d'extrémité axiale (72) du flasque de support (22), et le tronçon d'extrémité libre de la patte de fixation (66) qui fait saillie est retenu axialement par rapport au flasque de support (22) et au plateau de réaction (20), la couronne de démarreur (78) étant solidarisée par soudage (92) au flasque de support (22), ou par frettage au plateau de réaction (20), la cible (91) étant solidarisée par soudage auxdites pattes (66).

8. Module d'embrayage selon la revendication 7, caractérisé par le fait que le tronçon d'extrémité libre est soudé (92) au flasque de support (22).

9. Module d'embrayage selon la revendication 7, caractérisé par le fait que le tronçon d'extrémité libre est rabattu radialement.

10. Module d'embrayage selon la revendication 9, caractérisé par le fait que le tronçon d'extrémité libre est rabattu radialement vers l'extérieur en regard d'une face transversale en vis-à-vis (88) de la couronne de démarreur (78).

11. Module d'embrayage selon la revendication 7, caractérisé par le fait que le tronçon d'extrémité libre est soudé à la couronne de démarreur (78).

12. Module d'embrayage selon la revendication 7, caractérisé par le fait que le tronçon d'extrémité libre est serti (67).

13. Module d'embrayage selon l'une quelconque des revendications 7 à 12, caractérisé par le fait que chaque passage (68) est une rainure axiale formée dans la surface périphérique externe (70) du flasque de support (22) et qui est ouverte radialement vers l'extérieur.

14. Module d'embrayage selon l'une des revendications 7 à 13, caractérisé par le fait que chacune des pattes de fixation du couvercle traverse axialement un passage d'orientation axiale formé à la périphérie externe du plateau de réaction (20), et le tronçon d'extrémité libre de la patte de fixation qui fait saillie est retenu axialement par rapport au plateau de réaction.

15. Module d'embrayage selon l'une quelconque des revendications 7 à 14, caractérisé par le fait que chaque passage (68) est agencé radialement vers l'intérieur par rapport à la couronne de démarreur (78).

16. Module d'embrayage selon l'une quelconque des revendications 7 à 15, caractérisé par le fait que les pattes de fixation (66) sont issues d'une jupe annulaire (166) d'orientation axiale que présente le couvercle (12) à sa périphérie externe.

17. Module d'embrayage selon l'une des revendications 1 à 6, caractérisé par le fait que le flasque de support (22) présente des pattes, ou une jupe annulaire (130), d'orientation axiale sur lesquelles est montée la cible (91) et auxquelles elle est solidarisée par soudage (104).

## Claims

1. Clutch module (10), notably for a motor vehicle, of the type having a set of adjacent parts which are generally annular in shape and coaxial, amongst which are successively arranged axially a cover (12), a diaphragm (14), a pressure plate (16) connected with respect to rotation to the cover (12) by coupling means (60) allowing an axial movement of the pressure plate (16) with respect to the cover (12), a friction disc (18) able to be connected to a driven shaft, and a reaction plate (20), and of the type in which the friction disc (18) has at least one peripheral annular friction lining (36, 38) interposed between facing radial friction faces of the pressure plate (16) and reaction plate (20) fixed to the cover (12) by fixing means (62) arranged at the external periphery of the module (10), and of the type in which the reaction plate (20) is fixed to a support plate (22) able to be fixed with respect to rotation to a driving shaft, by means of a series of fixing members (26) arranged radially towards the inside with respect to the said fixing means (62), in which the pressure plate (16) is directly connected with respect to rotation to the cover (12) by the said coupling means (60), the cover (12) has at its external periphery a series of fixing lugs (66) which extend axially from a peripheral edge (58) of the cover (12), carrying a target defining crenellations, characterised by the fact that the said target is a piece made of attached sheet metal, fixed by welding to the periphery of one of the elements consisting of support plate (22) and cover (12), and by the fact that the said target (91) comprises a cylindrical middle part (101), provided with circumferentially distributed openings (102), connected by struts (103) to the clutch module.

2. Clutch module according to Claim 1, characterised by the fact that the struts (103) are placed at the axial ends of the middle part (101).

3. Clutch module according to Claims 2 or 3, characterised in that the struts (103) are transversely oriented and in that the target (91) surrounds the clutch module piece which carries the said target.

4. Clutch module according to Claim 2 or 3, characterised by the fact that the struts (103) are transverse solid cheeks.

5. Clutch module according to one of Claims 1 to 4, in which the clutch module carries a starter ring (78), characterised by the fact that the target (91) is placed axially against the said starter ring (78).

6. Clutch module according to Claim 5, characterised by the fact that the fixing of the target (91) by welding is provided only on the free side of the target (91) opposite to the one through which it is in contact with the starter ring (78).

7. Clutch module according to one of Claims 1 to 6, characterised by the fact that each of the fixing lugs (66) of the cover (12) passes axially through an axially oriented passage (68) formed at the external periphery of the support plate (22) in order to extend axially beyond the axial end face (72) of the support plate (22), and the free end portion of the fixing lug (66) which projects is held axially with respect to the support plate (22) and the reaction plate (20), the starter ring (78) being fixed by welding (92) to the support plate (22), or by shrinking onto the reaction plate (20), the target (91) being fixed by welding to the said lugs (66).

8. Clutch module according to Claim 7, characterised by the fact that the free end portion is welded (92) to the support plate (22).

9. Clutch module according to Claim 7, characterised by the fact that the free end portion is folded down radially.

10. Clutch module according to Claim 9, characterised by the fact that the free end portion is folded down radially towards the outside opposite a facing transverse face (88) of the starter ring (78).

11. Clutch module according to Claim 7, characterised by the fact that the free end portion is welded to the starter ring (78).

12. Clutch module according to Claim 7, characterised by the fact that the free end portion is crimped (67).

13. Clutch module according to any one of Claims 7 to 12, characterised by the fact that each passage (68) is an axial groove formed in the external peripheral surface (70) of the support plate (22) and which is open radially towards the outside.

14. Clutch module according to one of Claims 7 to 13, characterised by the fact that each of the fixing lugs of the cover passes axially through an axially oriented passage formed at the external periphery of the reaction plate (20), and the free end portion of the fixing lug which projects is held axially with respect to the reaction plate.

15. Clutch module according to any one of Claims 7 to 14, characterised by the fact that each passage (68) is arranged radially towards the inside with respect to the starter ring (78).

16. Clutch module according to any one of Claims 7 to 15, characterised by the fact that the fixing lugs (66) issue from an axially oriented annular skirt (166) which the cover (12) has at its external periphery.

17. Clutch module according to one of Claims 1 to 6, characterised by the fact that the support plate (22) has lugs, or an annular skirt (130), of annular orientation, on which the target (91) is mounted and to which it is fixed by welding (104).

## Patentansprüche

1. Kupplungsmodul (10), insbesondere für Kraftfahrzeuge, umfassend eine Baugruppe von nebeneinander angeordneten insgesamt ringförmigen und koaxialen Teilen, unter denen axial hintereinander ein Deckel (12), eine Membranfeder (14), eine Druckplatte (16), die mit dem Deckel (12) durch Verbindungsmittel (60) drehfest verbunden ist, die eine axiale Verschiebung der Druckplatte (16) im Verhältnis zum Deckel (12) ermöglichen, eine mit einer getriebenen Welle verbindbare Kupplungsscheibe (18) und eine Gegenanpreßplatte (20) angeordnet sind, die am Deckel (12) durch am äußeren Umfang des Moduls (10) angeordnete Befestigungsmittel (62) befestigt ist, wobei die Gegenanpreßplatte (20) fest mit einem Trägerflansch (22) verbunden ist, der drehfest mit einer treibenden Welle mittels einer Reihe von Befestigungsorganen (26) verbunden ist, die im Verhältnis zu den besagten Befestigungsmitteln (62) radial nach innen angeordnet sind, wobei die Druckplatte (16) durch die besagten Verbindungsmittel (60) direkt drehfest mit dem Deckel (12) verbunden ist, wobei der Deckel (12) an seinem äußeren Umfang eine Reihe von Befestigungsansätzen (66) umfaßt, die sich axial von einem Umfangsrand (58) des Deckels (12) aus erstrecken, der eine Bezugsmarkierung trägt, die Einschnitte definiert, **dadurch gekennzeichnet,** daß die besagte Bezugsmarkierung ein angefügtes Blechteil ist, das durch Schweißen fest mit dem Umfang eines der Elemente Trägerflansch (22) - Deckel (12) verbunden ist, und daß die besagte Bezugsmarkierung (91) einen zylindrischen Mittelteil (101) mit umfangsmäßig verteilten Öffnungen (102) umfaßt, der durch Abstandsstücke (103) mit dem Kupplungsmodul verbunden ist.

2. Kupplungsmodul nach Anspruch 1, **dadurch gekennzeichnet,** daß die Abstandsstücke (103) an den axialen Enden des Mittelteils (101) angeordnet sind.

3. Kupplungsmodul nach den Ansprüchen 1 oder 2, **dadurch gekennzeichnet,** daß die Abstandsstücke (103) quer ausgerichtet sind und daß die Bezugsmarkierung (91) das Teil des Kupplungsmoduls, das die besagte Bezugsmarkierung trägt, umgibt.

4. Kupplungsmodul nach den Ansprüchen 2 oder 3, **dadurch gekennzeichnet,** daß die Abstandsstücke (103) massive Querwangen sind.

5. Kupplungsmodul nach einem der Ansprüche 1 bis 4, bei dem das Kupplungsmodul einen Anlasserzahnkranz (78) trägt, **dadurch gekennzeichnet,** daß die Bezugsmarkierung (91) axial gegen den besagten Anlasserzahnkranz (78) angeordnet ist.

6. Kupplungsmodul nach Anspruch 5, **dadurch gekennzeichnet,** daß die feste Verbindung der Bezugsmarkierung (91) durch Schweißen nur auf der freien Seite der Bezugsmarkierung (91) vorgesehen ist, die derjenigen gegenüberliegt, durch die sie mit dem Anlasserzahnkranz (78) in Kontakt steht.

7. Kupplungsmodul nach einem der Ansprüche 1 bis 6, **dadurch gekennzeichnet,** daß jeder der Befestigungsansätze (66) des Deckels (12) axial durch einen am äußeren Umfang des Trägerflansches (22) ausgebildeten axial ausgerichteten Durchgang (68) hindurchgeht, um sich axial jenseits der axialen Abschlußfläche (72) des Trägerflansches (22) zu erstrecken, und das vorstehende freie Endteilstück des Befestigungsansatzes (66) im Verhältnis zum Trägerflansch (22) und zur Gegenanpreßplatte (20) axial gehalten wird, wobei der Anlasserzahnkranz (78) durch Schweißen (92) fest mit dem Trägerflansch (22) oder durch Aufschrumpfen mit der Gegenanpreßplatte (20) verbunden ist, während die Bezugsmarkierung (91) durch Schweißen fest mit den besagten Ansätzen (66) verbunden ist.

8. Kupplungsmodul nach Anspruch 7, **dadurch gekennzeichnet,** daß das freie Endteilstück am Trägerflansch (22) angeschweißt (92) ist.

9. Kupplungsmodul nach Anspruch 7, **dadurch gekennzeichnet,** daß das freie Endteilstück radial umgebogen ist.

10. Kupplungsmodul nach Anspruch 3, **dadurch gekennzeichnet,** daß das freie Endteilstück radial nach außen gegenüber einer gegenüberliegenden Querfläche (88) des Anlasserzahnkranzes (78) umgebogen ist.

11. Kupplungsmodul nach Anspruch 7, **dadurch gekennzeichnet,** daß das freie Endteilstück am Anlasserzahnkranz (78) angeschweißt ist.

12. Kupplungsmodul nach Anspruch 7, **dadurch gekennzeichnet,** daß das freie Endteilstück aufgefalzt ist (67).

13. Kupplungsmodul nach einem der Ansprüche 7 bis 12, **dadurch gekennzeichnet,** daß jeder Durchgang (68) eine axiale Nut ist, die in der äußeren Umfangsfläche (70) des Trägerflansches (22) ausgebildet ist und die radial nach außen offen ist.

14. Kupplungsmodul nach einem der Ansprüche 7 bis 13, **dadurch gekennzeichnet,** daß jeder der Befestigungsansätze des Deckels axial durch einen am äußeren Umfang der Gegenanpreßplatte (20) ausgebildeten, axial ausgerichteten Durchgang hindurchgeht und das vorstehende freie Endteilstück des Befestigungsansatzes im Verhältnis zur Gegenanpreßplatte axial gehalten wird.

15. Kupplungsmodul nach einem der Ansprüche 7 bis 14, **dadurch gekennzeichnet,** daß jeder Durchgang (68) im Verhältnis zum Anlasserzahnkranz (78) radial nach innen angeordnet ist.

16. Kupplungsmodul nach einem der Ansprüche 7 bis 15, **dadurch gekennzeichnet,** daß die Befestigungsansätze (66) aus einer axial ausgerichteten ringförmigen Einfassung (166) herausgearbeitet sind, die der Deckel (12) an seinem äußeren Umfang aufweist.

17. Kupplungsmodul nach einem der Ansprüche 1 bis 6, **dadurch gekennzeichnet,** daß der Trägerflansch (22) Ansätze oder eine axial ausgerichtete ringförmige Einfassung (130) aufweist, an denen die Bezugsmarkierung (91) angebracht ist und mit denen sie durch Schweißen (104) fest verbunden ist.
